Europäisches Patentamt

European Patent Office

Office européen des brevets

(11) Publication number: **0 276 667**
**A2**

## (12) EUROPEAN PATENT APPLICATION

(21) Application number: **88100250.5**

(22) Date of filing: **11.01.88**

(51) Int. Cl.⁴ **C08G 18/08** , C08G 18/10 , C08G 18/38 , C08G 18/28 , C08G 18/32 , C09D 3/72

(30) Priority: **12.01.87 US 2140**

(43) Date of publication of application:
**03.08.88 Bulletin 88/31**

(84) Designated Contracting States:
**AT BE CH DE ES FR GB GR IT LI LU NL SE**

(71) Applicant: **Ashland Oil, Inc.**
**1000 Ashland Drive**
**Russell Kentucky 41169(US)**

(72) Inventor: **Schoener, Thomas E.**
**489 Larcomb Avenue**
**Columbus Ohio 43223(US)**
Inventor: **Blakely, Brent A.**
**1017 Newfields Lane**
**Westerville Ohio 43081(US)**
Inventor: **Carlson, Gary M.**
**3097 Frobisher Avenue**
**Dublin Ohio 43017(US)**

(74) Representative: **Vossius & Partner**
**Siebertstrasse 4 P.O. Box 86 07 67**
**D-8000 München 86(DE)**

(54) **Stabilized moisture curable polyurethane coatings.**

(57) Disclosed is a method for improving the pot life of moisture curable polyurethane coating compositions. Such enhancement is accomplished by blending with said coating composition a stabilizing amount of a stabilizing agent from the group of a mercapto compound, a polyphenol characterized by being reactable with an isocyanate group in the presence of a tertiary amine catalyst, and mixtures thereof. Stabilizing amounts of the stabilizing agent typically range from about 1% to 10% by weight. The enhanced pot life is realized even in the presence of significant quantities of water.

## STABILIZED MOISTURE CURABLE POLYURETHANE COATINGS

### Background of the Invention

The present invention relates to moisture curable polyurethane coatings and more particularly to improving the pot life thereof.

Moisture curing polyurethanes are a class of materials which cure in the presence and because of atmospheric moisture. While this class of materials generally is known as "polyurethane resins", such term is somewhat a misnomer since the materials are based on isocyanates wherein cure involves the reaction of water supplied from the atmosphere with the free isocyanate groups present in the resin. The performance of the system is built into the resin backbone typically, so that only about 1-5 percent reactive isocyanate groups are required for achieving cure of the system.

Since moisture curable polyurethane resins are designed to cure in the presence of atmospheric moisture, their manufacture must exclude water. Careful choice of raw material sources and specification should ensure that water contents of less than 0.5% is maintained. Such moisture limitation is placed on the resin, the solvent system, and even pigments, fillers, extenders, and other additives incorporated into the final coating. Moreover, the use of water scavengers (e.g. calcium oxide, triethyl orthoformate, molecular sieves, and the like) typically is practiced in order to improve the shelf life or storage stability of the system. Of course, such care in manufacturing has a price both in terms of manufacturing costs as well as in restrictions on handling the coating composition in the field. A general discussion of moisture curing polyurethanes can be found by reference to Hughes, "Polyurethane Resins in Moisture Curable Surface Coatings", JOCCA, 69, 10 (1986).

With respect to the storage stability of moisture curable polyurethane coatings, manufacturers represent that shelf life can range on up to one year. When the container is opened for use of the moisture curable polyurethane coating, however, a limited pot life situation is encountered. Moreover, when the container is resealed, atmospheric moisture necessarily is present in the head space which drastically reduces the balance of the shelf life of the coating composition. These disadvantages, however, are not sufficient to detract from the advantages of moisture curable polyurethanes including application flexibility, ability to coat damp surfaces, ability to cure at low temperatures, and the like. Nevertheless, the ability to extend the pot life of moisture curable polyurethane resins still would be attractive to manufacturers and users of such products.

### Broad Statement of the Invention

The present invention is addressed to the pot life of moisture curable polyurethane coating compositions. Broadly, the present invention comprises a method for enhancing the pot life of such coating compositions in the presence of water by blending with said coating composition a stabilizing amount of a stabilizing agent selected from the group of a mercapto compound, a polyphenol characterized by being reactable with an isocyanate group in the presence of a tertiary amine catalyst, and mixtures thereof. The stabilizing amount of stabilizer generally does not exceed about 10% by weight of the moisture curable polyurethane coating composition and often such stabilizing amount ranges from about 1%-10% by weight. On an isocyanate index basis (molar ratio of isocyanate groups to mercapto groups), ratios of 1:1 represent a practical upper limit and such index often can range from about 4:1 to 1 about 1:1.

Advantages of the present invention include the ability to substantially extend and improve the pot life of moisture curable polyurethane coating compositions. Concomitant with such stability enhancement, the performance of the moisture curable polyurethane coating systems is substantially maintained and often can be improved slightly. A further advantage is the ability to implement the pot life enhancement of the present invention quite readily at commercial production lines. Another advantage is the ability to augment the moisture cure mechanism by the introduction of a catalyst which promotes the isocyanate/mercapto or isocyanate/polyphenol reaction, or to circumvent the slow moisture cure mechanism and cross-link the system rapidly. These and other advantages will be readily apparent to those skilled in the art based upon the disclosure contained herein.

Detailed Description of the Invention

The flexibility of the present invention can be appreciated by the fact that virtually any present commercial moisture curable polyurethane coating composition can be readily modified in accordance with the present invention. One important result of this flexibility is that the performance of moisture curable polyurethane coatings typically is built into the isocyanate-terminated prepolymer since levels of free isocyanate groups typically range from about 1-5 percent by weight (as is basis of coating). The present invention does not require the manufacturer to reformulate the coating composition because of the addition of the stabilizer. Thus, the excellent anti-yellowing properties, stain resistance, and wetting properties of the moisture curable polyurethane coating compositions are retained. While the full explanation as to how the stabilizer functions is not fully understood, the examples will demonstrate that liquid water even can be added to the stabilized coating compositions and excellent pot life retained. Such stability is unexpected when it is realized that water reacts with isocyanate groups very readily resulting in the formation of primary amine groups which are about the most reactive type of functionality with isocyanate groups. In this regard see Solomon, The Chemistry of Organic Film Formers, pp. 213-226, Robert E. Krieger Publishing Company, Inc. (Huntington, New York, 1977). Such excellent stability in the present of water even is realized at less that stoichiometric isocyanate indices. For present purposes, the pot life of the coating is the time required for the viscosity of the coating in an open pot to double from its initial viscosity. Pot lives of 24 hours are desirable.

Nevertheless, once the coating is drawn down on a substrate, moisture cure can proceed by the volatilization of the stabilizer from the applied film. Or course, the odor exhibited by evolved mercapto-functional compounds, for example, must be tolerated under such circumstances. Alternatively, a mercapto-stabilized moisture-curable polyurethane coating composition can be cured in the presence of catalytic tertiary amines in accordance with the Linden et al. process disclosed in commonly-assigned application Serial No. 905,700 filed September 9, 1986. The Linden et al. process is directed to coating compositions comprising polymercapto compounds and polyisocyanates which can be cured in the presence of catalytic tertiary amines. The amine catalysts can be supplied in a conventional vapor chamber (e.g. U.S. Pats. Nos. 4,491,610 and 4,520,750) or in accordance with the spray catalyst process of Blegen disclosed in U.S. Pat. No. 4,517,222. Polyphenol-stabilized coating compositions can be cured in the presence of catalytic tertiary amines in accordance with U.S. Pat. No. 4,366,193.

Regardless of the technique chosen for curing the coating composition, virtually all of the outstanding performance characteristics of the original moisture curable polyurethane coating compositions are maintained. Moreover, the action of atmospheric moisture and other sources of water serve only to further enhance the cure of the applied film. This means, for example, that an initial build-up of film properties can be gained by use of the catalytic tertiary amine followed by conventional moisture cure of the balance of the applied film to achieve the ultimate properties thereof. Such flexibility in use of the stabilized moisture curable polyurethane coating compositions of the present invention contribute to its value.

Referring now the the mercapto stabilizers, while it is possible that monomers, oligomers, and polymers containing pendant mercaptan or thiol groups can be envisioned for use in the present invention, preferably lower molecular weight monomers and oligomers are utilized in order not to interfere with the performance of the moisture curable polyurethane coating compositions being stabilized. Accordingly, preferred mercapto stabilizers include, for example, trimethylol propane tri-(3-mercapto propionate), pentaerythritrol tetra-(3-mercapto propionate), glycol di-(3-mercapto propionate), glycol di-mercapto acetate, trimethylol propane trithioglycolate, mercapto diethyl ether, ethane dithiol, thiolactic acid, mercapto propionic acid and esters thereof, thiophenol, thio acetic acid, 2-mercapto ethanol, 1,4-butanedithiol, 2-3-dimercapto propanol, toluene-3,4-dithiol, alpha,alpha'-dimercapto-para-xylene, thiosalicylic acid, mercapto acetic acid, dodecane dithiol, didodecane dithiol, di-thio phenol, di-parachlorothiophenol, dimercapto benzothiazole, 3,4-dimercapto toluene, allyl mercaptan, benzyl mercaptan, 1,6-hexane dithiol, 1-octane thiol, parathiocresol, 2,3,5,6-tetrafluorothiophenol, cyclohexyl mercaptan, methylthioglycolate, various mercapto pyridines, dithioerythritrol, 6-ethoxy-2-mercaptobenzothiazole, d-limonene dimercaptan, and the like and mixtures thereof. As noted above, the proportion of mercapto stabilizer broadly can range on up to about 10% by weight with typical ranges for present-day commercial moisture curable polyurethane coating compositions ranging from about 1-10 percent by weight.

The particular class of polyphenols effective as stabilizers are characterized by being reactable with an isocyanate group in the presence of a tertiary amine catalyst. Absent the tertiary amine catalyst, the polyphenols will tend to be quite unreactive with isocyanate groups for extended periods of time. The polyphenols behave as do mercapto groups in improving the pot life of moisture cure coatings. Representative polyphenols which function in the present invention include, for example, catechol, pyrogallol, 3-

3..

methoxy catechol, and the like. The polyphenols are more fully disclosed in U.S. Pat. No. 4,366,193.

Virtually any moisture-curable polyurethane coating composition can be stabilized in accordance with the precepts of the present invention. For present purposes, a "moisture-curable polyurethane coating composition" comprehends an isocyanate-terminated prepolymer containing between about 1 and 5 percent free isocyanate groups which coating composition is designed to cure in the presence of atmospheric moisture. While the art is replete in moisture curable polyurethane coating compositions some representative systems can be found, for example, in U.S. Pats. Nos. 3,706,710, 3,705,132, 3,642,943, 4,469,831, and 3,919,173. Such moisture-curable polyurethane coating compositions contain conventional non-aqueous volatile organic solvent systems, pigments, fillers, extenders, additives, flow-leveling agents, UV stabilizers, and like conventional additives depending upon the precise intended application of the formulation. Of course, such moisture curable polyurethane coating compositions are manufactured under strict conditions preclusive of the introduction of significant quantities of water with typical specifications requiring less than 0.5% by weight water to be present.

In practicing the present invention, the stabilizer simply is blended with the moisture curable polyurethane coating composition under conditions of agitation sufficient to render the resulting stabilized coating composition homogeneous in composition. Incompatibility of the stabilizers has not been determined to be a problem encountered during research on the present invention. Thereafter, the stabilized coating composition has good pot life since the exposure of atmospheric moisture to an open container of the stabilized coating composition will not result in premature gellation. As noted above, conventional cure can be realized with the evaporation of the stabilizer or the applied film can be cured in the presence of catalytic tertiary amines. Regardless of the cure, the properties of the applied film are substantially maintained and even can be improved on occasion.

The following examples show how the present invention has been practiced but should not be construed as limiting. In this application, all percentages and proportions are by weight unless otherwise expressly indicated and all citations referred to herein are expressly incorporated herein by reference.

## EXAMPLES

## EXAMPLE 1

A commercially-available clear moisture-curable isocyanate-terminated polyurethane coating composition (CHEMGLAZE® A074 A-line coating, Lord Corporation, Erie, Pa.) was evaluated for its storage stability with and without addition of pentaerythritol tetra-3-mercaptopropionate (PTM). The "A074 coating" is a aliphatic diisocyanate-based moisture curable system in xylene solvent and has the following published typical physical properties:

Color:     Clear
% Solids     34.5% by wt. (ASTM D2369-81)
Viscosity     $7.5 \times 10^{-2}$ Pas (Brookfield Model LVT, at 25°C)⊢
Density:     0.95 g/cm³ (ASTM D1475-60)
Flash Point:     26.5°C (Seta flash closed cap)

The A074 coating was divided into several lots. To one of the lots was added 3% by weight PTM (NCO:SH molar ratio of about 2:1) and to another lot was added 6% by weight PTM. A control lot (unmodified) also was retained. The control lot sealed in a glass jar with an overhead space of ambient indoor air solidified in less than two days. Neither of the PTM modified systems sealed in glass jars with the same content air space were solid after six days. Thus, the extra-storage stability of the PTM stabilized system is demonstrated.

Each of the three formulations (unstored lots) also were spray catalyst applied to 10.16 x 30.48 cm Bonderite 1000 panels using 0.5vol-% dimethyl-ethanol amine (DMEOLA) catalyst in accordance with U.S. Pat. No. 4,517,222. The dry films measured between 35.6 and 45.7 μm in thickness. The following cure response data was recorded.

## TABLE I

### Coating

| Test | A074 | A074 + 3% PTM | A074 + 6% PTM |
|------|------|---------------|---------------|
| Set to touch | 30 mins. | 20 mins. | 10 mins. |
| Print free | 1 hr. | 25 mins. | 15 mins. |
| Tack free | 1.25 hrs. | 45 mins. | 30 mins. |
| 5 Hr. MEK Rubs | 12 | 70 | 500+ |

This data demonstrates the curability of the PTM-modified systems consistent with USSN 905,700.

EXAMPLE 2

Additional commercial moisture cured polyurethane coatings were evaluated along with A074 of Example 1 for their storage with and without PTM. The following published data obtains for the coatings tested:

## TABLE II

| Property | CHEMGLAZE® A771 | CHEMGLAZE® A276 | SPENLITE*® M22-X-40 |
|----------|------------------|------------------|---------------------|
| Color | Blue | White | Clear |
| Solids (wt-%) | 49 | 54 | 39-41 |
| Viscosity (Pas) | 0.250 | 0.250 | $0.5$-$1.1 \times 10^{-4} m^2/s$ |
| Density (g/cm³) | 1.01 | 1.13 | 1.08 |
| Flash Point (°C Closed Cup) | 19 | 19.3 | 26 |

* Isophorone diisocyanate-based moisture cure urethane with xylol/methoxyl propyl acetate (95/5) solvents, Spencer Kellogg Products, NL Industries, Inc., Hightsown, N.J.

Lots of the urethane coating were modified by the addition of 5% by weight PTM. The PTM modified lots and unmodified control lots each were blended with 2% by weight of water, sealed in a metal container, and their viscosities (#4 Ford cup) determined as follows:

## TABLE III

### Viscosity (sec)

| Coating | Initial | 3 Hrs | 6 Hrs | 24 Hrs |
|---|---|---|---|---|
| A771 | 32 | 80 | 342 | hard gel |
| A771/PTM | 32 | 34 | 36 | 134 |
| A276 | 24 | 51 | 262 | hard gel |
| A276/PTM | 24 | 24 | 24 | 50 |
| A074 | 16 | 19 | 24 | soft gel |
| A074/PTM | 16 | 16 | 16 | 17 |
| M-22 | 22 | 74 | 575 | hard gel |
| M-22/PTM | 22 | 22 | 22 | 33 |

The stabilizing influence of the mercaptan stabilizer again is demonstrated by the above-tabulated data.

### EXAMPLE 3

With the enhancement of pot life of moisture cure urethane coatings amply demonstrated, attention now is focused on the effect with a mercapto stabilizer addition has on performance. Desirably, the performance will be maintained or slightly improved by the addition of a mercapto stabilizer. Accordingly, the SPENLITE® M22-X-40 moisture cure urethane coating of Example 2 was evaluated further.

Initially, the "M-22 coating" was drawn down on a vinyl substrate and exposed for 60 seconds to 2.0 vol-% triethylamine catalyst vapors in a vapor cure chamber. Thereafter, the applied film required more than one hour to achieve a tack free state. When a blend of the M-22 coating (92.5 wt-%) and PTM was applied to a vinyl substrate and allowed to air dry, again the applied film required more than one hour to achieve a tack free state. Additionally, the film began to emit an undesirable odor of free mercaptan after about 5-10 minutes. When another lot of the same M-22/PTM coating was drawn down on vinyl substrate and exposed to 0.5 vol-% triethylamine vapor in the vapor cure chamber, the applied film was tack free and block free within 15 seconds. Three days later, both the chamber cured and air dried M-22 neat films had 18 MEK (methyl ethyl ketone) rubs resistance. The M-22/PTM film air dried displayed 25 MEK rubs resistance while the M-22/PTM film chamber cured had 40 MEK rubs resistance. Thus, the physical properties of the moisture cure urethane coating appear to be maintained or slightly enhanced by the addition of the mercaptan stabilizer.

Yellowing resistance was determined after 110 hour QUV exposure.

### TABLE IV

| Film Tested | $\Delta b$ |
|---|---|
| Uncoated Vinyl | 1.48 |
| M-22, Air Dry | 1.79 |
| M-22/PTM, Chamber Cured | 2.82 |

Again, the substantial preservation of performance of the moisture cure urethane coatings containing a mercapto stabilizer is demonstrated.

EXAMPLE 4

The ability of polyphenols to extend the pot life of the SPENLITE® M22-X-40 moisture cure urethane coating of Example 2 was evaluated with catechol (25% by weight in MEK solvent). Catechol was blended with the "M22 coating" at 5 weight percent. An unstabilized lot, a catechol stabilized lot, and a PTM stabilized lot of coating each were dosed with 2 weight percent water and viscosity measurements taken (#4 Ford cup).

## TABLE V

### Viscosity (sec)

| Coating | Init | 3 Hrs | 6 Hrs | 24 Hrs | 48 Hrs | 72 Hrs |
|---------|------|-------|-------|--------|--------|--------|
| Control | 19 | 48 | 700 | Gel | — | — |
| PTM | 19 | 19 | 22 | 25 | 74 | Gel |
| Catechol | 16 | 16 | 16 | 19 | 27 | 58 |

The above-tabulated data clearly demonstrates the pot life extension capability of catechol, as well as again confirms the efficacy of mercapto stabilizers.

## Claims

1. A method for enhancing the storage stability of a moisture-curable polyurethane coating composition in the presence of water which comprises blending in said coating composition a stabilizing amount of a stabilizer selected from the group of a mercapto compound, a polyphenol being reactable with an isocyanate group in the presence of a tertiary amine catalyst, and mixtures thereof.

2. The method of claim 1 wherein the stabilizing amount of said stabilizer is not more than about 10% by weight of said coating composition.

3. The method of claim 1 wherein the stabilizing amount of said mercapto stabilizer ranges from between about 1% and 10% by weight.

4. The method of claim 1 wherein said coating composition contains between about 1% and 5% by weight free isocyanate groups.

5. The method of claim 3 wherein said coating composition contains between about 1% and 5% free isocyanate groups.

6. The method of claim 1 wherein said stabilizer comprises a mercapto compound.

7. The method of claim 5 wherein said mercapto stabilizer is selected from the group consisting of trimethylol propane tri-(3-mercapto propionate), pentaerythritol tetra-(3-mercapto propionate), glycol di-(3-mercapto propionate), glycol di-mercapto acetate, trimethylol propane trithioglycolate, mercapto diethyl ether, ethane dithiol, thiolactic acid, mercapto propionic acid and esters thereof, thiophenol, thio acetic acid, 2-mercapto ethanol, 1,4-butanedithiol, 2-3-dimercapto propanol, toluene-3,4-dithiol, alpha,alpha'-dimercapto-para-xylene, thiosalicylic acid, mercapto acetic acid, dodecane dithiol, didodecane dithiol, di-thio phenol, di-parachlorothiophenol, dimercapto benzothiazole, 3,4-dimercapto toluene, allyl mercaptan, benzyl mercaptan, 1,6-hexane dithiol, 1-octane thiol, parathiocresol, 2,3,5,6-tetrafluorothiophenol, cyclohexyl mercaptan, methylthioglycolate, various mercapto pyridines, dithioerythritol, 6-ethoxy-2-mercaptobenzothiazole, d-limonene dimercaptan, and mixtures thereof.

8. The method of claim 1 wherein said stabilizer comprises a polyphenol.

9. The method of claim 8 wherein said polyphenol is selected from the group consisting of catechol, 3-methoxy catechol, pyrogallol, and mixtures thereof.

10. Stabilized moisture-curable polyurethane coating compositions prepared according to any of the methods of claims 1 to 9.